# EUROPEAN PATENT APPLICATION

(11) **EP 2 400 689 A1**
(43) Date of publication of application: **28.12.2011**
(21) Application number: 10750341.9
(22) Date of filing: 03.03.2010
(51) Int. Cl.: H04L 9/32

(54) **METHOD, DEVICE AND SYSTEM FOR AUTHENTICATION**

(30) Priority: 09.03.2009 CN 200910127217
(71) Applicant: Huawei Technologies Co., Ltd., Shenzhen, Guangdong 518129 (CN)
(72) Inventor: PAN, Jian, Shenzhen Guangdong 518129 (CN); TANG, Lei, Shenzhen Guangdong 518129 (CN)
(74) Representative: Körber, Martin Hans
(86) International application number: PCT/CN2010/070859
(87) International publication number: WO 2010/102545

(57) **Abstract**

An authentication method, an authentication apparatus, and an authentication system are disclosed. The authentication method includes: receiving second authentication information sent by an application server when first authentication succeeds; sending the second authentication information to a corresponding terminal through a telecommunication network; receiving an identifier (ID) for identifying the terminal and the second authentication verification information that are returned by the terminal through the telecommunication network; and performing a second authentication according to the ID and the second authentication verification information, or forwarding the ID and the second authentication verification information to the application server, so that the application server performs the second authentication. The ID and the second authentication information are transmitted through the telecommunication network for the second authentication, thereby avoiding transmitting the second authentication verification information through a data communication network channel, so as to improve the security of the second authentication, namely the third-party authentication, as well as the security of web services.

## Description

This application claims priority to Chinese Patent Application No. 200910127217.8, filed with the Chinese Patent Office on March 9, 2009 and entitled "AUTHENTICATION METHOD, AUTHENTICATION APPARATUS AND AUTHENTICATION SYSTEM", which is incorporated herein by reference in its entity.

### FIELD OF THE INVENTION

The present invention relates to the field of communication technologies, and in particular, to an authentication method, a third-party authentication apparatus, a terminal, and an authentication system.

### BACKGROUND OF THE INVENTION

At present, network applications usually employ a "client/server" mode, that is, a user enjoys web services provided by a server through a client. However, in order to obtain the web services provided by the server, the client must have certain rights. The user inputs verification information such as an account and a password through the client, and the server performs authentication. After the authentication succeeds, the server provides web services for the client. The authentication mode is "user name" + "password", or "user name" + "password" + "verification code".

In the prior art, in the authentication, an application server performs first authentication on verification information, namely first authentication information, sent by an application client. After the authentication succeeds, second authentication information such as a random number, a service state identifier (ID), and an activation link, is sent to a third-party authentication apparatus such as an instant messaging system, an Internet Protocol (IP) Private Branch Exchange (IP PBX), a Web Service server, and an Email server, for second authentication. The third-party authentication apparatus sends the second authentication information to a pre-registered terminal through a data communication network. After a user clicks the activation link on the terminal, the third-party authentication apparatus checks whether the first authentication of the client corresponding to a request of the link succeeds according to saved state information. If the first authentication succeeds, and a link request of the second authentication also comes from the client (which may be determined by using an IP address), the second authentication succeeds; If the first authentication fails or a link request of the second authentication does not come from the client, the second authentication fails. Alternatively, if the client does not perform the second authentication in a long period, the third-party authentication apparatus considers that the authentication fails, and the application server sends authentication result information to the application client to complete the authentication.

The prior art has the following disadvantages: in the second authentication using the data communication network such as an IP network, once the application client device (which includes but is not limited to a personal computer) or the terminal is infected by data-stealing viruses, the verification information and the second authentication information may be obtained through the data-stealing virus software illegally, which greatly reduces the security of the second authentication.

### SUMMARY OF THE INVENTION

Embodiments of the present invention provide an authentication method, an authentication apparatus and an authentication system, so as to improve the security of third-party authentication.

An embodiment of the present invention provides an authentication method, including:
receiving second authentication information sent by an application server when first authentication succeeds;
sending the second authentication information to a corresponding terminal through a telecommunication network;
receiving an ID for identifying the terminal and second authentication verification information that are returned by the terminal through the telecommunication network; and
performing second authentication according to the ID and the second authentication verification information, or forwarding the ID and the second authentication verification information to the application server, so that the application server performs the second authentication.

An embodiment of the present invention provides a third-party authentication apparatus, including:
a first receiving module, configured to receive second authentication information sent by an application server when first authentication succeeds;
a sending module, configured to send the second authentication information to a corresponding terminal through a telecommunication network;
a second receiving module, configured to receive an ID for identifying the terminal and second authentication verification information that are returned by the client through the telecommunication network; and
a forwarding module, configured to forward the ID for identifying the terminal and the second authentication verification information that are returned by the client to the application server, so that the application server performs second authentication.

An embodiment of the present invention provides a third-party authentication apparatus, including:
a first receiving module, configured to receive second authentication information sent by an application server when first authentication succeeds;
a sending module, configured to send the second authentication information to a corresponding terminal through a telecommunication network;
a second receiving module, configured to receive an ID for identifying the terminal and second authentication verification information that are returned by the client through the telecommunication network; and
an authentication module, configured to determine whether the ID and the second authentication verification information agree with registration information of a user of the terminal.

An embodiment of the present invention provides a terminal, including:
a receiving module, configured to receive second authentication information sent by a third-party authentication apparatus through a telecommunication network; and
a sending module, configured to return an ID for identifying a client and second authentication verification information to the third-party authentication apparatus through the telecommunication network.

An embodiment of the present invention provides an authentication system, including:
an application server, configured to perform first authentication according to received verification information, and send second authentication information when the first authentication succeeds; and
a third-party authentication apparatus, configured to receive the second authentication information, send the second authentication information to a corresponding terminal through a telecommunication network, receive an ID for identifying the terminal and second authentication verification information that are returned by the terminal through the telecommunication network, and perform second authentication according to the ID and the second authentication verification information.

An embodiment of the present invention provides an authentication system, including:
an application server, configured to perform first authentication according to received verification information, and send second authentication information when the first authentication succeeds; and
a third-party authentication apparatus, configured to receive the second authentication information, send the second authentication information to a corresponding terminal through a telecommunication network, receive an ID for identifying the terminal and second authentication verification information that are returned by the terminal through the telecommunication network, and forward the ID and the second authentication verification information to the application server, so that the application server performs second authentication.

In the preceding embodiments, the ID and the second authentication information are transmitted through the telecommunication network for the second authentication, thereby avoiding transmitting the second authentication information through a data communication network channel and therefore improving the security of the second authentication, namely, the third-party authentication, and the security of web services.

The technical solutions of the present invention are described in detail below with reference to the accompanying drawings and embodiments.

### BRIEF DESCRIPTION OF THE DRAWINGS

FIG. 1 is a schematic structural diagram of an authentication system according to an embodiment of the present invention;
FIG. 2 is a schematic structural diagram of another authentication system according to an embodiment of the present invention;
FIG. 3 is a schematic structural diagram of a server according to another embodiment of the present invention;
FIG. 4 is a schematic structural diagram of another server according to an embodiment of the present invention;
FIG. 5 is a schematic structural diagram of an access gateway according to an embodiment of the present invention;
FIG. 6 is a schematic structural diagram of a logic processing device of a third-party authentication system according to an embodiment of the present invention;
FIG. 7 is a schematic structural diagram of still another server according to an embodiment of the present invention;
FIG. 8 is a schematic structural diagram of a terminal according to an embodiment of the present invention; and
FIG. 9 is a flow chart of an authentication method according to an embodiment of the present invention.

### DETAILED DESCRIPTION OF THE EMBODIMENTS

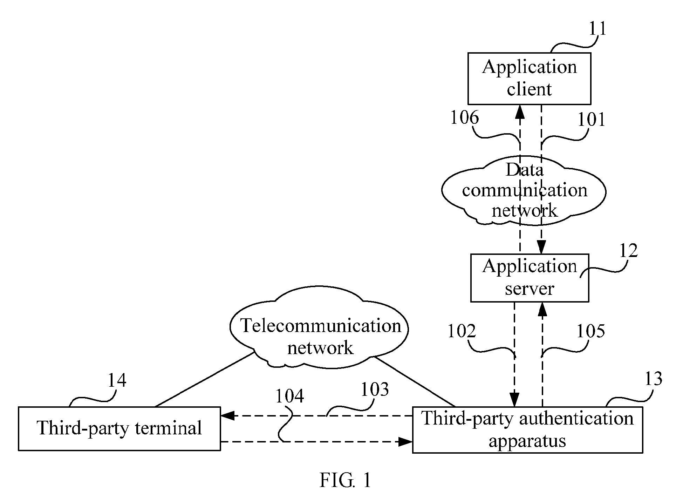

FIG. 1 is a schematic structural diagram of an authentication system according to an embodiment of the present invention. The authentication system includes an application server 12, a third-party authentication apparatus 13 and a third-party terminal 14. The third-party authentication apparatus 13 and the third-party terminal 14 are connected through a telecommunication network. The third-party authentication apparatus 13 includes, but is not limited to, a contact center and a call center. The third-party terminal 14 includes, but is not limited to, a fixed-line phone, a mobile phone, a fax machine, and an intelligent terminal such as a Personal Digital Assistant (PDA). The telecommunication network is a current or a next generation telecommunication network, for example, a Public Switched Telephone Network (PSTN).

An authentication process of the authentication system may be described as follows.
Step 101: An application client 11 sends verification information to the application server 12. The verification information may be first authentication information such as an account or a password.
Step 102: The application server 12 verifies, namely performs first authentication on, the verification information. After the authentication succeeds, it is confirmed that a first verification is valid. The login state such as a session is saved, and second authentication information is sent to the third-party authentication apparatus 13 for second authentication; the second authentication information includes, but is not limited, to a random number, an activation code, and a service state ID.
Step 103: After receiving the second authentication information, the third-party authentication apparatus 13 sends, through the telecommunication network, the second authentication information to the third-party terminal 14 that is pre-registered. For example, when the third-party terminal 14 is a fixed-line phone, the third-party authentication apparatus 13 may notify the third-party terminal 14 of returning a client ID and the second authentication information such as the activation code by playing an automatic voice. When the third-party terminal 14 is a fax machine, the third-party authentication apparatus 13 may send the second authentication information to the third-party terminal 14 by faxing. When the third-party terminal 14 is a mobile phone or an intelligent terminal, the third-party authentication apparatus 13 may send the second authentication information to the third-party terminal 14 through a short message.
Step 104: The third-party terminal 14 returns second authentication verification information and the third-party client ID to the third-party authentication apparatus 13 through the telecommunication network by initiating a call, sending a short message or faxing, so that the third-party authentication device 13 performs the second authentication. For the PSTN, the most common third-party client ID may be a calling number.
Step 105: The third-party authentication apparatus 13 performs the second authentication. The second authentication for the third-party client ID (such as the calling number) and the second authentication verification information such as the activation code may specifically include determining whether the received third-party client ID agrees with an ID assigned to the third-party terminal 14 locally, and determining whether the received second authentication verification information agrees with the saved second authentication information, namely user registration information at an application server side. A same client has IDs at both the application server and the third-party authentication apparatus. Assume that the ID of a certain client at the application server is A, and the ID of the client in the third-party system is B. The relationship between A and B is one-to-many, many-to-many, or many-to-one; or the client has the same ID in the application server and the third-party authentication device. For example, one online game account may correspond to multiple contact phone numbers. When the client registers, the application server saves and maintains the corresponding relationship, namely the user registration information. The corresponding relationship may also be maintained by a third-party authentication server. The specific implementation may be creating a corresponding relationship table in the application server or adding a client relationship management module in the application server, where the client relationship management module processes client relationships. For example, an online game server queries the table to obtain a corresponding phone number; or the online game server sends a request to the client relationship management module and submits an online game account to obtain the corresponding phone number. The client relationship management module may have independent hardware, or be a sub-system of the online game server.

The third-party authentication apparatus 13 sends authentication result information to the application server 12. The third-party client ID includes, but is not limited to, a phone number, a mobile terminal number, and a client ID that is assigned by a third party. The client may have a unique ID in the entire authentication system, for example, a user name; the client may also have one ID (for example, the user name) in the application and another ID (for example, a cell phone number) in the third-party authentication system. If the client has two IDs, a mapping relationship exists between the two IDs, which may be a many-to-many relationship, a one-to-many relationship, or a many-to-one relationship. For example, the client has one user name in the application and three cell phone numbers in the third-party authentication system, and all these IDs are valid; on the contrary, one cell phone number in the third-party authentication system may authenticate three user names, and all these IDs are also valid. These mapping relationships may be saved in the application server or the third-party authentication server.
Step 106: The application server 12 finds the corresponding application client 11 according to the user registration information, and sends the authentication result information to the application client 11.

In this embodiment, the third-party authentication apparatus 13 and the third-party terminal 14 are connected through the telecommunication network, thereby avoiding transmitting the second authentication verification information that is to be sent to the third-party terminal 14 through a data communication network channel, so that data-stealing virus software cannot obtain the second authentication verification information, and cannot illegally use rights of the application client 11, thereby improving the security of the authentication system and web services. Assume that the application client 11 is common chatting software, the third-party authentication apparatus 13 is a conventional switch, and the third-party terminal 14 is a fixed-line phone. After the user starts the chatting software and logs in, the application server 12 notifies the user of the second authentication verification information through an interface between the data communication network and the telecommunication network by using the fixed-line phone in a voice mode. The user calls back by using the fixed-line phone and notifies the second authentication verification information, and the switch performs the authentication, thereby preventing such information from being stolen by the data-stealing virus software and improving the security of the second authentication.

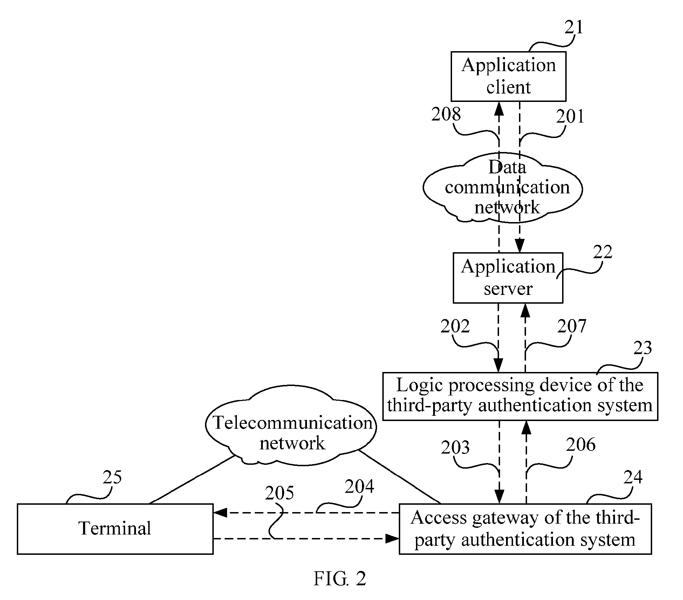

FIG. 2 is a schematic structural diagram of another authentication system according to an embodiment of the present invention. The difference between this embodiment and the preceding embodiment lies in that the third-party authentication apparatus includes an access gateway of the third-party authentication system and a logic processing device of the third-party authentication system. The access gateway of the third-party authentication system and the logic processing device of the third-party authentication system can communicate with each other through a data communication network, or communicate with each other in other manners such as by serial communication. In this embodiment, the authentication system includes an application server 22, a logic processing device of the third-party authentication system 23, an access gateway of the third-party authentication system 24 and a terminal 25.

An authentication process of the authentication system in this embodiment may be described as follows:
Step 201: An application client 21 sends verification information to the application server 22.
Step 202: The application server 22 performs first authentication on the verification information.

If the authentication succeeds, the login state such as a session is saved, and second authentication information is sent to the logic processing device of the third-party authentication system 23.
Step 203: The logic processing device of the third-party authentication system 23 receives the second authentication information, and forwards the second authentication information to the access gateway of the third-party authentication system 24.
Step 204: The access gateway of the third-party authentication system 24 sends the received second authentication information to the pre-registered terminal 25 through the telecommunication network.
Step 205: The terminal 25 initiates a call to the access gateway of the third-party authentication system 24 through the telecommunication system, and inputs second authentication verification information such as an activation code, so as to perform the authentication.
Step 206: The access gateway of the third-party authentication system 24 forwards the second authentication verification information sent by the terminal 25 to the logic processing device of the third-party authentication system 23.
Step 207: The logic processing device of the third-party authentication system 23 determines whether a third-party client ID and the second authentication verification information sent by the access gateway of the third-party authentication system 24 agree with registration information sent by the application server 22. If the third-party client ID and the second authentication verification information agree with the registration information, the authentication succeeds; if the third-party client ID and the second authentication verification information do not agree with the registration information, the authentication fails, and authentication result information is sent to the application server 22.
Step 208: The application server 22 sends the authentication result information to the application client 21.

In this embodiment, the access gateway of the third-party authentication system 24 and the terminal 25 are connected through the telecommunication network, thereby avoiding transmitting the second authentication verification information that is to be sent to the terminal 25 through a data communication network channel, so that data-stealing virus software cannot obtain the second authentication verification information, and cannot illegally use rights of the application client 21, therefore improving the security of the authentication system and web services.

Another embodiment of the present invention further provides an authentication system, and the difference between this authentication system and the preceding systems lies in that the second authentication is executed by the application server, that is, the third-party authentication apparatus, after receiving the call initiated by the third-party terminal, sends the second authentication verification information and the client ID sent by the third-party terminal to the application server, so that the application server performs authentication on the second authentication verification information and the client ID. Registration information of the application client is saved in the application server, and includes the second authentication information and the terminal ID set by the user; therefore, authentication may be performed on the second authentication information and ID provided by the third-party terminal directly, without forwarding the registration information to the third-party authentication apparatus for determination and authentication, thereby greatly improving the execution efficiency of the authentication.

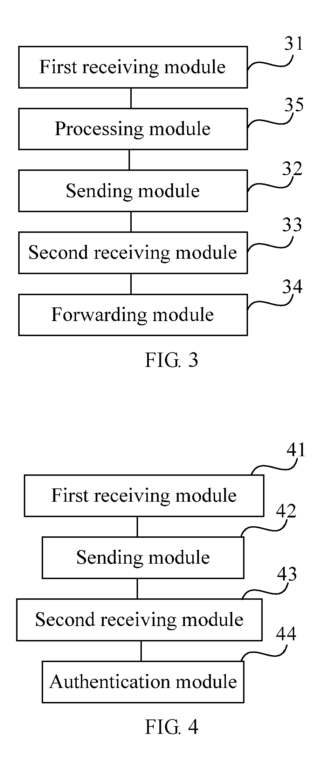

FIG. 3 is a schematic structural diagram of a server according to another embodiment of the present invention. In this embodiment, the server may be a third-party authentication apparatus, and second authentication is executed by an application server. The server may include a first receiving module 31, a sending module 32, a second receiving module 33, a forwarding module 34 and a processing module 35. The application server sends second authentication information to the server if first authentication succeeds. The first receiving module 31 receives the second authentication information sent by the application server. The processing module 35 is configured to analyze the second authentication information to obtain a sending object ID of the second authentication information. The sending module 32 sends the second authentication information to a corresponding client, namely a terminal, through a telecommunication network.

After receiving the second authentication information, the terminal returns the ID and the second authentication verification information. The second receiving module 33 receives the ID for identifying the client and the second authentication verification information. The forwarding module 34 forwards the ID for identifying the client and the second authentication verification information received by the receiving module to the application server, so as to perform second authentication. For the second authentication information, the second authentication verification information, the telecommunication network, the ID for identifying the client, and the specific working process involved in this embodiment, reference may be made to the related content in the preceding system embodiment, and details are not described herein again.

FIG. 4 is a schematic structural diagram of another server according to an embodiment of the present invention. In this embodiment, the server may be a third-party authentication apparatus that executes second authentication and includes a first receiving module 41, a sending module 42, a second receiving module 43 and an authentication module 44. An application server sends second authentication information if first authentication succeeds, and the first receiving module 41 receives the second authentication information sent by the application server. The sending module 42 sends the second authentication information to a corresponding client, namely a terminal, through a telecommunication network. After receiving the second authentication information, the terminal returns the ID for identifying the client and second authentication verification information. The second receiving module 43 receives the ID for identifying the client and the second authentication verification information that are returned by the client. The authentication module 44 determines whether the ID and the second authentication verification information received by the second receiving module 43 agree with registration information of a user of the client. For the second authentication information, the second authentication verification information, the telecommunication network, the ID for identifying the client, and the specific working process involved in this embodiment, reference may be made to the related content disclosed in the embodiment in FIG. 1, and details are not described herein again.

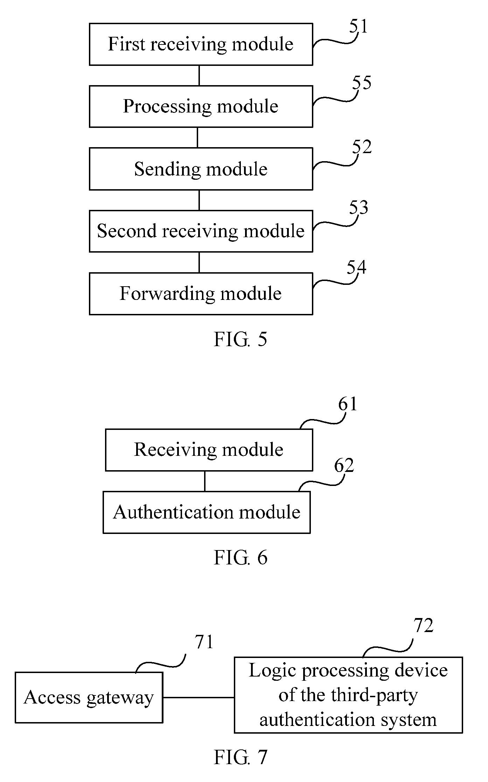

FIG. 5 is a schematic structural diagram of an access gateway according to an embodiment of the present invention. In this embodiment, a third-party authentication apparatus may also include a logic processing device of a third-party authentication system and an access gateway of the third-party authentication system. Specifically, second authentication is executed by the logic processing device of the third-party authentication system. The access gateway may be the access gateway of the third-party authentication system and includes a first receiving module 51, a sending module 52, a second receiving module 53, a forwarding module 54 and a processing module 55. An application server sends second authentication information to the logic processing device of the third-party authentication system if first authentication succeeds. The logic processing device of the third-party authentication system sends the second authentication information to the access gateway of the third-party authentication system. The first receiving module 51 receives the second authentication information from the application server through the access gateway of the third-party authentication system. The processing module 55 is configured to analyze the second authentication information to obtain a sending object ID of the second authentication information. The sending module 52 is configured to send the second authentication information to a corresponding client, namely a terminal, through a telecommunication network according to the sending object ID. After receiving the second authentication information, the terminal returns the ID for identifying the client and second authentication verification information through the telecommunication network. The second receiving module 53 receives the ID for identifying the client and the second authentication verification information that are returned by the client. The forwarding module 54 forwards the ID and the second authentication verification information received by the second receiving module 53 to a logic processing device of the third-party authentication system. For the second authentication information, the telecommunication network, the second authentication verification information, the ID for identifying the client, and the specific working process involved in this embodiment, reference may be made to the related content disclosed in the embodiment related to FIG. 2, and details are not described herein again.

FIG. 6 is a schematic structural diagram of a logic processing device of a third-party authentication system according to an embodiment of the present invention. In this embodiment, the logic processing device of the third-party authentication system may be a device capable of executing second authentication, for example, a computer, a controller with a logic control function and an intelligent terminal PDA. The logic processing device of the third-party authentication system includes a receiving module 61 and an authentication module 62. The receiving module 61 of the logic processing device of the third-party authentication system receives an ID for identifying a client and second authentication verification information sent by an access gateway of the third-party authentication system; and the authentication module 62 determines whether the ID and the second authentication information received by the receiving module agree with registration information of a user of a client. For the second authentication information, the second authentication verification information, the telecommunication network, the ID for identifying the client, and the specific working process involved in this embodiment, reference may be made to the related content disclosed in the embodiment related to FIG. 2, and details are not described herein again.

FIG. 7 is a schematic structural diagram of still another server according to an embodiment of the present invention. The server includes an access gateway 71 and a logic processing device of a third-party authentication system 72. The access gateway 71 may be the access gateway in the embodiment related to FIG. 5. For details of the logic processing device of the third-party authentication system 72, reference may be made to the logic processing device in the embodiment related to FIG. 6. The access gateway 71 receives second authentication information sent by an application server, and sends the second authentication information to a corresponding terminal through a telecommunication network. After receiving the second authentication information, the terminal returns an ID for identifying the terminal and second authentication verification information to the access gateway 71 through the telecommunication network. The access gateway 71 sends the ID for identifying the terminal and the second authentication verification information to the logic processing device of the third-party authentication system 72. The logic processing device of the third-party authentication system 72 performs the authentication according to whether the received ID and the second authentication verification information agree with registration information of a user of the client. For the second authentication information, the second authentication verification information, the telecommunication network, the ID for identifying the client, and the specific working process involved in this embodiment, reference may be made to the related content disclosed in the embodiment related to FIG. 2, and details are not described herein again.

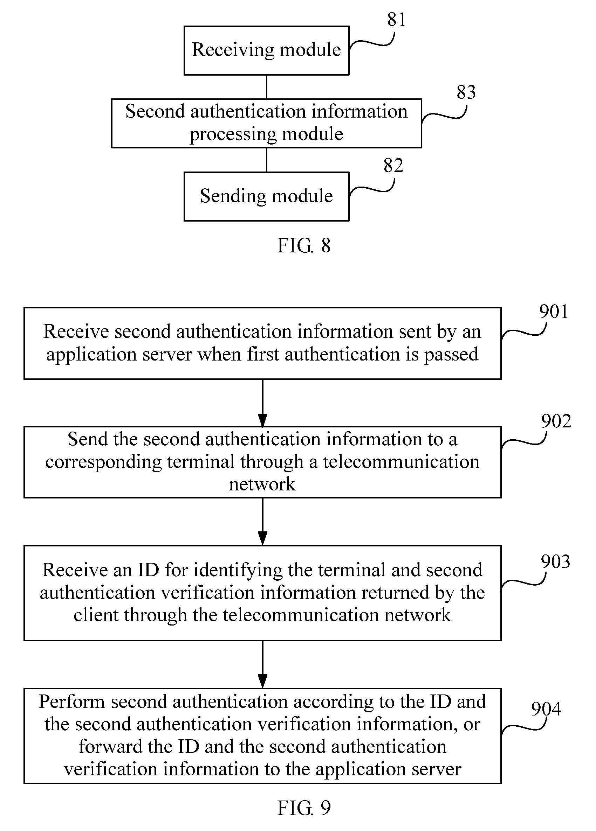

FIG. 8 is a schematic structural diagram of a terminal according to an embodiment of the present invention. The terminal in this embodiment may be a fixed-line phone, a mobile phone, a fax machine or an intelligent terminal PDA, and includes a receiving module 81, a sending module 82 and a second authentication information processing module 83. After a third-party authentication apparatus sends second authentication information to the terminal through a telecommunication network, the receiving module 81 receives the second authentication information. The second authentication information processing module 83 processes the second authentication information according to the second authentication information and obtains second authentication verification information. The sending module 82 returns an ID for identifying a client and the second authentication verification information to a server of the third-party authentication system through the telecommunication network. For the second authentication information, the second authentication verification information, the telecommunication network, the ID for identifying the client, and the specific working process involved in this embodiment, reference may be made to the related content disclosed in the embodiment related to FIG. 1 and FIG. 2, and details are not described herein again.

FIG. 9 is a flow chart of an authentication method according to an embodiment of the present invention. The authentication process may include the following steps.
Step 901: Receive second authentication information sent by an application server when first authentication succeeds; a third-party authentication apparatus or a logic processing device of a third-party authentication system may execute the receiving action.
Step 902: Send the second authentication information to a corresponding client, namely a terminal, through a telecommunication network. When the third-party authentication apparatus executes step 901, the step is also executed by the third-party authentication apparatus. When the logic processing device of the third-party authentication system executes step 901, the step may include: the logic processing device of the third-party authentication system forwards the second authentication information to an access gateway of the third-party authentication system, and the access gateway of the third-party authentication system sends the second authentication information to the terminal through the telecommunication network.
Step 903: Receive an ID for identifying the client and second authentication verification information that are returned by the client through the telecommunication network; an execution subject of this step is the same as an execution subject sending the second authentication verification information through the telecommunication network in step 902.
Step 904: When the execution subject of step 903 is the third-party authentication apparatus, perform second authentication according to the ID and the second authentication verification information, or forward the ID and the second authentication verification information to an application server, so that the application server performs the second authentication. When the execution subject of step 903 is the third-party authentication apparatus, the step can be executed by the third-party authentication apparatus. When the execution subj ect of step 903 is the access gateway of the third-party authentication system, the access gateway of the third-party authentication system forwards the ID and the second authentication verification information to the application server, namely the logic processing device of the third-party authentication system, for processing, so that the logic processing device of the third-party authentication system performs the second authentication.

The preceding method may further include returning an authentication result. When the application server executes the second authentication, the application server directly returns the authentication result to an application client. When the third-party authentication apparatus or the logic processing device of the third-party authentication system executes the second authentication, the third-party authentication apparatus or the logic processing device of the third-party authentication system sends authentication result information to the application server, and then the application server sends the authentication result information to the application client.

In the preceding method embodiments, the authentication system uses the telecommunication network as a channel for the second authentication, and delivers an ingress of the second authentication to a third-party system on the telecommunication network, for example, a contact center system, therefore avoiding the attack by the virus software, making the data-stealing virus software useless and greatly improving the security of the authentication system.

Persons of ordinary skill in the art should understand that all or part of the steps of the method according to the embodiments may be implemented by a program instructing relevant hardware. The program may be stored in a computer readable storage medium. When the program is executed, the steps of the method according to the embodiments are performed. The storage medium may be any medium capable of storing program codes, such as a ROM, a RAM, a magnetic disk, or an optical disk.

Finally, it should be noted that the preceding embodiments are merely provided for describing the technical solutions of the present invention, but not intended to limit the present invention. It should be understood by persons of ordinary skill in the art that although the present invention has been described in detail with reference to the embodiments, modifications may be made to the technical solutions described in the embodiments, or equivalent replacements may be made to some technical features in the technical solutions, as long as such modifications or replacements do not depart from the spirit and scope of the present invention.

## Claims

1. An authentication method, comprising:
receiving second authentication information sent by an application server when first authentication succeeds;
sending the second authentication information to a corresponding terminal through a telecommunication network;
receiving an identifier (ID) for identifying the terminal and second authentication verification information that are returned by the terminal through the telecommunication network; and
performing second authentication according to the ID and the second authentication verification information, or forwarding the ID and the second authentication verification information to the application server, so that the application server performs the second authentication.

2. The authentication method according to claim 1, wherein the performing the second authentication according to the ID and the second authentication verification information comprises: determining whether the ID and the second authentication information agree with registration information preset by a user of the terminal.

3. The authentication method according to claim 1 or 2, further comprising:
generating an authentication failure result if the ID and the second authentication verification information that are returned by the terminal are not received within a preset period.

4. A third-party authentication apparatus, comprising:
a first receiving module, configured to receive second authentication information sent by an application server when first authentication succeeds;
a sending module, configured to send the second authentication information to a corresponding terminal through a telecommunication network;
a second receiving module, configured to receive an identifier (ID) for identifying the terminal and second authentication verification information that are returned by the terminal through the telecommunication network; and
a forwarding module, configured to forward the ID for identifying the terminal and the second authentication verification information that are returned by the terminal to the application server, so that the application server performs second authentication.

5. A third-party authentication apparatus, comprising:
a first receiving module, configured to receive second authentication information sent by an application server when first authentication succeeds;
a sending module, configured to send the second authentication information to a corresponding terminal through a telecommunication network;
a second receiving module, configured to receive an identifier (ID) for identifying the terminal and second authentication verification information that are returned by the terminal through the telecommunication network; and
an authentication module, configured to determine whether the ID and the second authentication verification information agree with registration information of a user of the terminal.

6. A terminal, comprising:
a receiving module, configured to receive second authentication information sent by a third-party authentication apparatus through a telecommunication network; and
a sending module, configured to return an identifier (ID) for identifying a terminal and second authentication verification information to the third-party authentication apparatus through the telecommunication network.

7. An authentication system, comprising:
an application server, configured to perform first authentication according to received verification information, and send second authentication information when the first authentication succeeds; and
a third-party authentication apparatus, configured to receive the second authentication information, send the second authentication information to a corresponding terminal through a telecommunication network, receive an identifier (ID) for identifying the terminal and second authentication verification information that are returned by the terminal through the telecommunication network, and perform second authentication according to the ID and the second authentication verification information.

8. An authentication system, comprising:
an application server, configured to perform first authentication according to received verification information, and send second authentication information when the first authentication succeeds; and
a third-party authentication apparatus, configured to receive the second authentication information, send the second authentication information to a corresponding terminal through a telecommunication network, receive an identifier (ID) for identifying the terminal and second authentication verification information that are returned by the terminal through the telecommunication network, and forward the ID and the second authentication verification information to the application service, so that the application server performs second authentication.
